# EUROPÄISCHE PATENTANMELDUNG

(11) **EP 3 575 817 A1**
(43) Veröffentlichungstag der Anmeldung: **04.12.2019**
(21) Anmeldenummer: 18175198.3
(22) Anmeldetag: 30.05.2018
(51) Int. Cl.: G01S 7/292, G01S 13/34, G01S 13/88, G01F 23/284

(54) **VERFAHREN ZUR FÜLLSTANDMESSUNG**

(71) Anmelder: VEGA Grieshaber KG, 77709 Wolfach (DE)
(72) Erfinder: Welle, Roland, 77756 Hausach (DE); Wälde, Steffen, 78078 Niedereschach (DE)
(74) Vertreter: Patentanwälte Bauer Vorberg Kayser

(57) **Zusammenfassung**

Verfahren zur Füllstandmessung mit einem Radarfüllstandmessgerät anhand folgender Schritte: Aussenden eines Sendesignals mit einer Mehrzahl von Frequenzrampen, Empfangen eines Empfangssignals pro Frequenzrampe des Sendesignals, Abspeichern der Empfangssignale in einem Speicher, Durchführen einer ersten Spektralanalyse der Empfangssignale oder Durchführen einer zweiten Spektralanalyse der Empfangssignale, , Durchführen einer zweiten Spektralanalyse mehrerer Ausgangssignale der ersten Spektralanalyse an der Stelle wenigstens eines signifikanten Reflektors im Empfangssignal oder Durchführen einer ersten Spektralanalyse mehrerer Ausgangssignale der zweiten Spektralanalyse, Ermitteln von Abständen signifikanter Reflektoren aus den Ergebnissen der ersten Spektralanalyse, , Bestimmung des Füllstandechos aufgrund der zuvor ermittelten Informationen.

## Beschreibung

Die vorliegende Erfindung betrifft ein Verfahren zur Füllstandmessung mit einem Radarfüllstandmessgerät.

Die Füllstandmessung mit Radar ist heute Stand der Technik. Aufgrund weitreichender Unabhängigkeit gegenüber äußeren Einflüssen und durch die Erschließung höherer Arbeitsfrequenzen mit Hilfe neuartiger Halbleiterbauelemente können mit modernen Radarfüllstandmessgeräten sehr exakte Messergebnisse zuverlässig ermittelt werden. Bekannte Füllstandmessgeräte messen den Abstand zu einem Füllgut und anderen Reflexionsstellen, nachfolgend auch Reflektoren genannt, innerhalb eines Behälters durch Anwendung eines Puls-Laufzeit-Verfahrens oder eines FMCW-Verfahrens (FMCW = Frequency Modulated Continous Wave). Eine Ermittlung der Geschwindigkeit der so bestimmten Reflektoren ist auf diese Art aber nicht ohne weiteres möglich.

Eine Herausforderung speziell im Umfeld von chemischen Reaktionsbehältern ergibt sich in der Praxis nach wie vor bei einer ungünstigen Montageposition des Messgerätes.

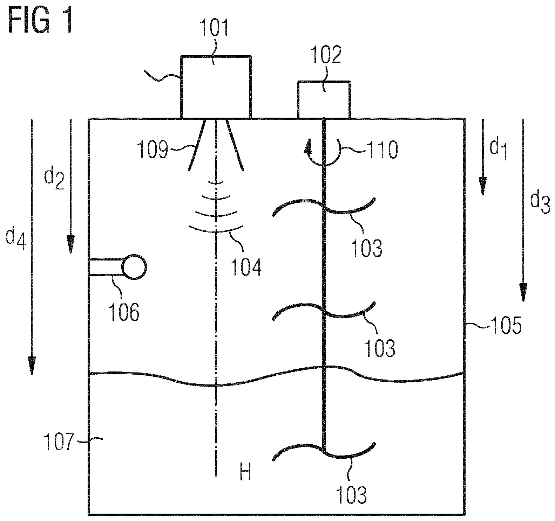

Figur 1 zeigt eine Füllstandmessanordnung 100, wie sie aus dem Stand der Technik bekannt ist. Bedingt durch die durch einen zum Einsatz kommenden Messbehälter 105 vordefinierten Positionen von Montageöffnungen befindet sich ein Radarfüllstandmessgerät 101, nachfolgend auch als Radarmessgerät bezeichnet, in direkter räumlicher Nähe zu einem ebenfalls in dem Messbehälter 105 montierten Rührwerk 102, dessen Rührwerksflügel 103 in einer ersten Entfernung d1 und einer dritten Entfernung d3 von dem Radarmessgerät 101 emittierte Messsignale 104, nachfolgend auch als Sendesignale bezeichnet, reflektieren. Innerhalb des Messbehälters 105 befindet sich darüber hinaus in einer zweiten Entfernung d2 zu dem Radarmessgerät 101 ein Zuleitungsrohr 106 zum Zuführen eines Mediums 107 oder einer vom Prozess benötigten Reaktionskomponente. Die Messsignale 104 werden in dem Messbehälter 105 sowohl von der Oberfläche des Mediums 107 als auch von den weiteren Reflektoren, bspw. den Messflügeln 103 und dem Zuleitungsrohr 106 reflektiert, von einer Antenne 109 des Radarmessgeräts 101 wieder empfangen und zur Bestimmung des Füllstands, d.h. vorliegend einer vierten Entfernung d4 der Oberfläche des Mediums 107 von dem Radarmessgerät 101, genutzt. Für die Bestimmung des Füllstands d4 muss eine Unterscheidung des Füllstands d4 von den Reflexionen der weiteren Reflektoren erfolgen.

Figur 2 zeigt übliche Signalformen bei der Füllstandmessanordnung und einer Füllstandmessung nach dem FMCW-Verfahren.

In Figur 2a) ist der Verlauf einer Frequenz f eines von dem Radarmessgerät 101 während einer Messperiode T ausgesendeten Messsignals 104 über der Zeit t in Kurve 209 dargestellt.

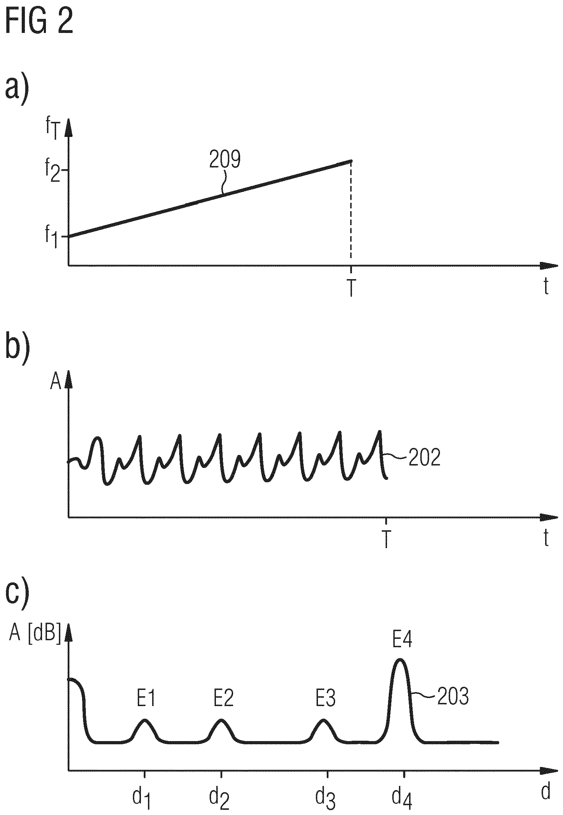

Das von dem Radarmessgerät 101 emittierte Messsignal 104 wird während der Messperiode T üblicherweise zwischen einer Startfrequenz f1 und einer Zielfrequenz f2 linear mit ansteigender oder abfallender Frequenz f moduliert. Während dieser Messperiode T werden die von der Antenne 109 erfassten, an einzelnen Reflexionsstellen 103, 106, 107 innerhalb des Behälters 105 reflektierten Hochfrequenzsignale als Empfangsssignal empfangen und nach bekannten Verfahren auf eine niederfrequente Zwischenfrequenz, und mit Hilfe bekannter Schaltungen in eine digitale Repräsentation umgesetzt, deren Verlauf in Kurve 202 der Figur 2b) gezeigt ist und nachfolgend als Zwischensignal bezeichnet wird.

Zur Ermittlung enthaltener Einzelreflexionen wird das Zwischensignal üblicherweise einer Spektralanalyse unterworfen, beispielsweise durch Anwendung einer schnellen Fouriertransformation. Das Ergebnis der Spektralanalyse ist in Kurve 203 der Figur 2c) gezeigt. Diese Darstellung wird auch als Echokurve 203 bezeichnet und liegt digital in einem Speicher des Radarmessgerätes 101 vor. Die Echokurve 203 repräsentiert die erfasste Radarsignalleistung in dB als Funktion der Laufzeit bzw. als Funktion der Entfernung d von dem Radarmessgerät.

Im vorliegenden Beispiel folgt die Echokurve 203 dem in Figur 1 dargestellten Szenario. Ein erstes Echo E1 und ein drittes Echo E3 werden von den im Sichtbereich des Radarmessgerätes 101 befindlichen Rührwerksflügeln 103 verursacht.

Das zweite Echo E2 entsteht durch eine Reflexion des Messsignals 104 an dem Zuflussrohr 106. Das letzte und amplitudenmäßig größte Echo E4 wird von der Oberfläche des Mediums 107 erzeugt. Übliche Verfahren identifizieren das größte Echo, vorliegend das vierte Echo E4, als Füllgutecho, und ermitteln dessen Entfernung d4 als Messwert der eigentlichen Füllstandmessung.

Das vorgenannte Verfahren führt aber bereits im Beispiel der Figur 1 zu einem unzuverlässigen Verhalten, wenn die Rührwerkflügel 103 des Rührwerks 102 eine Drehung 110 ausführen, also das Rührwerk aktiviert ist. Je nach Ausrichtung der Rührwerksflügel 103 variiert die an diesen reflektierte Signalleistung erheblich, was dazu führt, dass die Echos E1 und E3 massiven Amplitudenschwankungen von Messung zu Messung unterliegen. Übersteigt der Wert der Amplitude eines der Echos E1 oder E3 den Wert der Amplitude des Echos E4 wird ein falscher Messwert ermittelt, was zu erheblichen Problemen in einem Leitsystem der Füllstandmessanordnung 100 führen kann.

Drastisch erschwert wird die Füllstandmessung, wenn in dem Messbehälter 105 gemäß Figur 1 der Zufluss aktiviert wird, d.h. Füllgut 107 durch das Zuflussrohr 106 in den Messbehälter 105 einströmt.

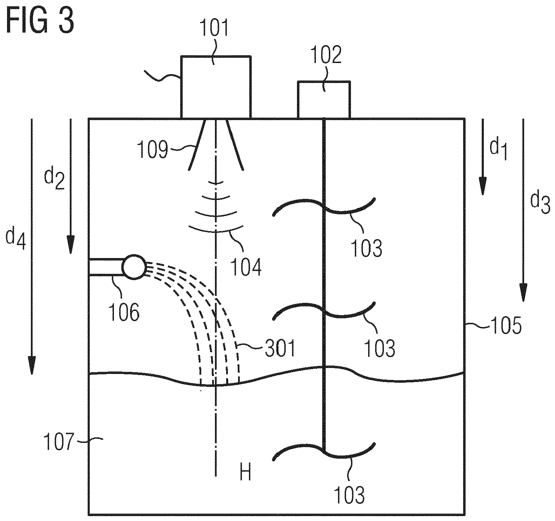

Figur 3 zeigt ein entsprechendes Szenario, in dem durch das Zuflussrohr 106 zufließendes Füllgut 301 in den Messbehälter 105 einströmt. Das in den Messbehälter 105 über das Zuflussrohr 106 zufließende Füllgut 301 befindet sich direkt in Hauptabstrahlrichtung H des Radarmessgeräts 101 und damit im Haupterfassungsbereich des Radarmessgerätes 101. Das einströmende Medium 301 verdeckt damit die Sicht auf die Oberfläche des eigentlich zu messenden Mediums 107 und erschwert damit die Füllstandmessung.

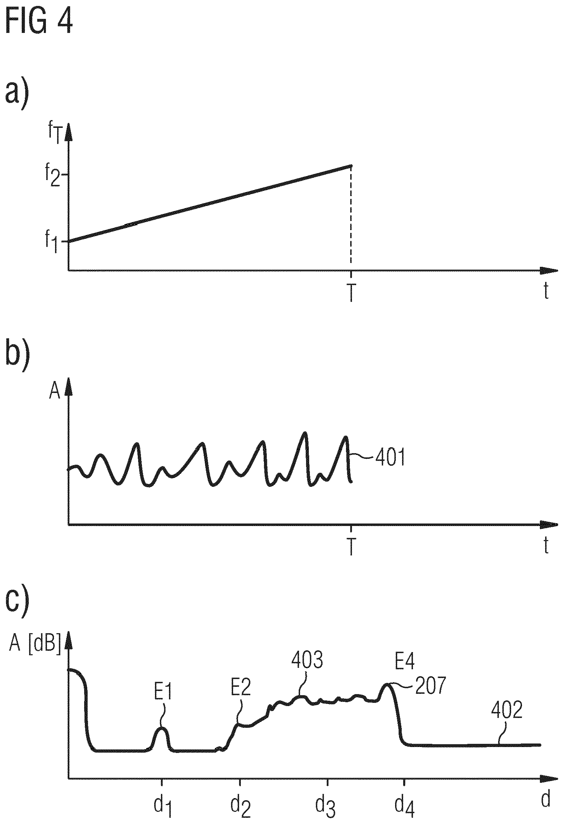

Figur 4 zeigt übliche Signalformen bei der Füllstandmessung nach dem FMCW Prinzip. In den Figuren 4a) und 4b) sind das Sendesignal (Figur 4a)) und das auf eine Zwischenfrequenz umgesetzte und digitalisierte Empfangssignal (Figur 4b), Kurve 401) gezeigt.

Figur 4c) zeigt die vom Füllstandmessgerät 101 in diesem Fall ermittelte Echokurve 402. Die Reflexionen E1 des ersten Rührwerksflügels 103 und E2 des Zuflussrohres 106 sind nahezu identisch zum Kurvenverlauf der Figur 2 zu erkennen. Für Echos mit einer Entfernung d, die größer als die zweite Entfernung d2 des Zuflussrohrs 106 ist, steigt der Pegel der Echokurve 402 jedoch massiv an, was durch die Überlagerung einer Vielzahl von Einzelreflexionen an den Partikeln des zuströmenden Mediums 301 verursacht wird. Die Identifikation des vierten Echos E4 der Oberfläche des Mediums 107 als Füllstand d4 wird fast unmöglich, wenn die Reflexionsanteile 403 des zufließenden Füllguts 301 Echopegel in der Größenordnung der Oberfläche des Mediums 107 erzeugen.

Eine sichere Identifikation und somit auch eine exakte Vermessung des Füllstands in dem Messbehälter 105 wird nahezu unmöglich. Speziell in Situationen einer Befüllung des Messbehälters 105 stellt dieses Verhalten ein erhebliches Problem dar.

Es ist eine Aufgabe der vorliegenden Erfindung, ein Verfahren zur Füllstandmessung bereit zu stellen, das eine Füllstandmessung auch in den oben beschriebenen Situationen ermöglicht.

Diese Aufgabe wird durch ein Verfahren mit den Merkmalen des Patentanspruchs 1 gelöst. Vorteilhafte Weiterbildungen des Verfahrens sind Gegenstand abhängiger Patentansprüche.

Ein erfindungsgemäßes Verfahren zur Füllstandmessung mit einem Radarfüllstandmessgerät weist folgende Schritte auf:
- Aussenden eines Sendesignals mit einer Mehrzahl von Frequenzrampen,
- Empfangen eines Empfangssignals pro Frequenzrampe des Sendesignals,
- Abspeichern der Empfangssignale,
- Durchführen einer ersten Spektralanalyse der Empfangssignale,
- Ermitteln von Abständen signifikanter Reflektoren aus der ersten Spektralanalyse wenigstens eines Empfangssignals,
- Durchführen einer zweiten Spektralanalyse mehrerer Ausgangssignale der ersten Spektralanalyse wenigstens an der Stelle wenigstens eines signifikanten Reflektors,
- Ermitteln einer Änderung einer Phase zwischen den Empfangssignalen an den Stellen signifikanter Reflektoren,
- Bestimmung des Füllstandechos aufgrund der zuvor ermittelten Informationen.

Das Sendesignal weist dazu eine Mehrzahl von Frequenzrampen auf. Bei solchen Frequenzrampen, die auch als Chirps bezeichnet werden, durchläuft das Sendesignal bspw. in einer Rampendauer von wenigen Mikrosekunden bis zu einigen hundert Mikrosekunden, bspw. 100 µs oder 200 ps, einen Frequenzbereich von einigen GHz, bspw. 5 GHz oder 10 GHz, vorzugsweise in einem Frequenzbereich zwischen 75 GHz und 85 GHz. Die Frequenzrampen können dabei kontinuierlich durchgesweept werden, d.h. dass eine kontinuierliche Veränderung der Frequenz erfolgt, oder in einer feinen Rasterung, bspw. in 5 Hz-Schritten, diskrete Frequenzwerte innerhalb des Frequenzbereichs beinhalten.

Die Empfangssignale werden Empfangen und in einem Zwischenspeicher abgespeichert, wobei pro Frequenzrampe ein Empfangssignal erhalten wird. Die Empfangssignale können dabei insbesondere jeweils in eine Zeile des Zwischenspeichers geschrieben werden.

Die einzelnen Empfangssignale werden mit einer ersten Spektralanalyse insbesondere zeilenweise vom Zeit- in den Frequenzbereich überführt, wobei eine Frequenzverschiebung des Empfangssignals relativ zum Sendesignal proportional zu einem Abstand eines Reflektors zum Sender ist, sodass relevante Reflektoren und deren Abstände zum Füllstandmessgerät aus dem erhaltenen Signal ermittelt werden können.

Durch die erste Spektralanalyse wird ein Signal erhalten, aus dem die jeweilige Signalenergie bei einer bestimmten Frequenz und damit in einer bestimmten Entfernung zu dem Radarmessgerät ersichtlich ist. Übersteigt die Signalamplitude einen bestimmten Wert, so wird von einem relevanten Reflektor ausgegangen

Als relevanter Reflektor werden bspw. Reflektoren mit Signalen angesehen, die ausgehend von einer maximalen detektierten Signalamplitude des Signals nach der ersten Spektralanalyse eine minimale Amplitude die maximal 20 dB unterhalb der maximalen Amplitude liegt, übersteigen. Alternativ kann eine Klassifikation eines Reflektors als relevanter Reflektor auch ausgehend von einem Grundrauschen erfolgen. Als relevanter Reflektor werden dann Signale angesehen, die das Grundrauschen um wenigstens 3 dB übersteigen.

Die Definition dessen, was als relevanter Reflektor angesehen wird, kann abhängig von den konkreten Messbedingungen auch angepasst werden.

Durch die zweite Spektralanalyse, die spaltenweise, wenigstens am Ort, d.h. den Frequenzen der relevanten Reflektoren über die Ausgangssignale der ersten Spektralanalyse durchgeführt wird, wird eine von einer Geschwindigkeit des Reflektors abhängige Phasenverschiebung des Signals ermittelt. Aus der Veränderung der Phase über die einzelnen Empfangssignale hinweg kann eine Geschwindigkeitsverteilung am Ort des Reflektors ermittelt werden.

Alternativ kann auch vorgesehen sein, zunächst die zweite Spektralanalyse auf den Empfangssignalen durchzuführen, und in einem darauf aufbauenden Schritt die erste Spektralanalyse über die Ausgangssignale der zweiten Spektralanalyse durchzuführen. Durch die erste Spektralanalyse wird in diesem zweiten Ausführungsbeispiel wiederum ein Signal erhalten, aus dem die jeweilige Signalenergie bei einer bestimmten Frequenz und damit in einer bestimmten Entfernung zu dem Radarmessgerät ersichtlich ist. Im Gegensatz zu der oben beschriebenen Vorgehensweise kann jedoch erst nach Abschluss der zweiten Spektralanalyse und der darauf folgenden ersten Spektralanalyse mit der Identifikation relevanter Reflektoren begonnen werden. Sind diese identifiziert, so kann allerdings auch hier die Geschwindigkeit des Reflektors anhand der so erhaltenen Ergebnisse ermittelt werden.

Die nachfolgend ausgeführten Details beschreiben die genaue Vorgehensweise bei der Umsetzung der Erfindung gemäß dem obigen, ersten Verfahren. Es sei jedoch darauf hingewiesen, dass es möglich ist, die offenbarten Ablaufschritte und Zusammenhänge anzupassen und zu modifizieren, also insbesondere die Reihenfolge der ersten Spektralanalyse und der zweiten Spektralanalyse zu vertauschen. Der Offenbarungsgehalt der vorliegenden Erfindung schließt daher ausdrücklich beide Umsetzungen ein.
Mit den so ermittelten Informationen kann der Füllstand, d.h. der Abstand der Füllgutoberfläche von dem Füllstandmessgerät bzw. ein dazu korrespondierender Wert, zuverlässig ermittelt werden. Insbesondere ist es möglich, zu den einzelnen Reflektoren eine Geschwindigkeitskomponente zuzuordnen und so bestimmte Reflektoren für die Ermittlung des Füllstands auszuschließen.

Die Schritte des oben beschriebenen Verfahrens werden bevorzugt in der angegebenen Reihenfolge durchlaufen. Alternativ kann die zweite Spektralanalyse in Spaltenrichtung vor der ersten Spektralanalyse in Zeilenrichtung erfolgen. Die beiden Spektralanalysen können auch in einer zweidimensionalen Spektralanalyse zusammengefasst sein.

Das Ermitteln der Abstände der Reflektoren kann zur Eliminierung von Messfehlern in einzelnen Empfangssignalen auf Basis eines Mittelwerts einer Mehrzahl von Empfangssignalen erfolgen.

Zur Bestimmung des Füllstandechos aus den Abständen der signifikanten Reflektoren kann eine Klassifikation der einzelnen Reflektoren anhand spezifischer Charakteristika erfolgen. Es kann beispielsweise eine Klassifikation der signifikanten Reflektoren in zumindest eine der Klassen Füllgutecho, Störecho, Bodenecho, Zuflussecho oder Rührwerksecho vorgesehen sein. Es kann vorgesehen sein, die Klassifikation zumindest eines signifikanten Reflektors auf Basis einer Geschwindigkeitsverteilung am Ort des Reflektors durchzuführen. Es kann vorgesehen sein, das Füllgutecho unter einer Vielzahl signifikanter Reflektoren nach einem Ausschlussverfahren zu identifizieren.

Durch eine solche Klassifikation können unterschiedliche Klassen von Reflektoren unterschieden werden. Die Klassifikation kann bspw. anhand einer Datenbank erfolgen, in der typische Klassen von Reflektoren und deren Charakteristik abgelegt sind.

Beispielsweise weisen Rührwerke in einer Entfernung zu den Rührwerksflügeln jeweils positive und eine dazu spiegelbildliche negative Geschwindigkeitskomponente auf.

Zufließendes Medium weist häufig bspw. eine diffus verbreitete negative Geschwindigkeitskomponente auf und kann ebenfalls erkannt werden

Feststehende Einbauten sind aufgrund einer Geschwindigkeitskomponente bei der Geschwindigkeit 0 erkennbar. Ebenso ist beispielsweise ein steigender oder sinkender Füllstand an einer entsprechenden Geschwindigkeitskomponente identifizierbar.

Ferner können zur Bestimmung des Füllstandechos aus den Abständen der signifikanten Reflektoren historische Informationen aus vorhergehenden Messungen berücksichtigt werden.

Wurde bspw. ein Reflektor mit einem, bestimmten Abstand bereits als feststehendes Einbauteil klassifiziert, so kann dieser Reflektor bei der Bestimmung des Füllstandechos außer Betracht bleiben. Bspw. kann ferner der zuletzt ermittelte Füllstand und eine maximale Befüll- oder Entleergeschwindigkeit des zugrundeliegenden Messbehälters in die Bestimmung einbezogen werden. Der aktuelle Füllstand muss nämlich ausgehend von dem zuletzt ermittelten Füllstand in einem durch die Befüll- und Entleergeschwindigkeit vorbestimmten Bereich liegen.

Als Verfahren für die Spektralanalyse kann bspw. eine schnelle Fouriertransformation (FFT) eingesetzt werden. Die schnelle Fouriertransformation ist ein in der Signalverarbeitung weit verbreitetes und effektives Verfahren zur Überführung von Signalen zwischen dem Zeit- und dem Frequenzbereich.

Das Sendesignal weist vorzugsweise wenigstens 25, weiter bevorzugt wenigstens 50 und idealerweise einigen Hundert Frequenzrampen auf, die ausgesendet werden.

Die Anzahl der Frequenzrampen, die in einem Sendesignal enthalten sind, gibt die Anzahl der möglichen Empfangssignale vor. Diese Anzahl bestimmt eine maximal mögliche zeitliche Auflösung oder Geschwindigkeitsauflösung für das Ausgangssignal der zweiten Spektralanalyse, sodass dadurch auch die Anzahl der Signalpunkte für die Bestimmung der Phasenänderung und damit der Geschwindigkeit einhergeht.

In der praktischen Umsetzung des Verfahrens weist das Sendesignal eine Anzahl von 2ⁿ Frequenzrampen auf, wobei das Sendesignal typischerweise 128, 256 oder 512 Frequenzrampen enthält. Eine entsprechende Anzahl an Frequenzrampen bietet für Anwendungen in der Füllstandmesstechnik eine hinreichend feine Auflösung, sodass sämtliche relevanten Geschwindigkeiten erfasst werden können.

Eine Frequenzrampe kann eine Dauer zwischen einer 1 µs und 1000 µs aufweisen. Typischerweise wird die Dauer der Frequenzrampen zwischen 50 µs und 300 µs liegen und insbesondere 100 µs oder 200 µs betragen.

Je steiler die Frequenzrampen verlaufen, d.h. je kürzer die Dauer der Frequenzrampen relativ zu einem Frequenzhub, d.h. dem Abstand einer unteren Grenzfrequenz zu einer oberen Grenzfrequenz der Frequenzrampe ist, umso größer wird die Frequenzverschiebung des Empfangssignals relativ zum Sendesignal. Tendenziell werden daher steilere Frequenzrampen bevorzugt, da kommerziell erhältliche Auswerteschaltungen, die immer kleinere geometrische Dimensionen aufweisen, eher zur Verarbeitung hoher Frequenzen ausgelegt sind.

Um Messfehler auszuschließen kann eine Startfrequenz und/oder eine Steigung und/oder eine Schrittweite und/oder eine Endfrequenz der Frequenzrampen variiert werden.

Durch eine Variation der Parameter des Verfahrens, bspw. der Anzahl an Frequenzrampen, der Startfrequenz, der Zielfrequenz, der Sweepzeit oder der Pausenzeit zwischen den Frequenzrampen im einem Sendesignal können Störeinflüsse, bspw. durch andere Sender minimiert, und eine Auswertung dynamisch verändert und optimiert werden. Beispielsweise können entsprechende Veränderungen abhängig von den bislang beobachteten Geschwindigkeiten der Reflektoren erfolgen, sodass bspw. durch eine Anpassung der Anzahl der Frequenzrampen die Auflösung hinsichtlich der Geschwindigkeitsauswertung erhöht oder erniedrigt wird.

Bspw. kann auch vorgesehen sein, dass eine Scharmittelung über die Rohdaten aus den Empfangssignalen oder die durch die Spektralanalyse erhaltenen komplexwerteigen Echokurven durchgeführt wird. Eine solche Mittelung kann bspw. in Abhängigkeit von der in einer vorhergehenden Messung ermittelten Geschwindigkeit der Füllgutreflexion automatisiert erfolgen.

Ferner kann vorgesehen sein, die Geschwindigkeitswerte des Füllgutechos oder anderer Reflektoren nach außen hin bereitzustellen, d.h. diese Daten als zusätzliche Informationen an bspw. eine Leitwarte zu übermitteln.

Es kann vorgesehen sein, die Erfindung im Kontext bildgebender Radarsysteme zu verwenden, und die Orts-Geschwindigkeits-Auswertung um Verfahren der Strahlformung zu erweitern.

Um Energie und Rechenleistung zu sparen kann die Füllstandmessung unter guten Messbedingungen gemäß dem Stand der Technik mit einem FMCW-Verfahren erfolgen und das oben beschriebene Verfahren nur dann angewendet werden, wenn eine Füllstandmessung mit einem FMCW-Verfahren nicht möglich ist. Bspw. kann die Anzahl der Störstrahler, oder die aufgrund der von Störstrahlern hervorgerufenen Amplituden im Empfangssignal oder eine Störung durch eine laufende Befüllung des Prozesstanks dazu führen, dass mit dem Verfahren gemäß dem Stand der Technik eine zuverlässige Bestimmung des von der Füllgutoberfläche hervorgerufenen Echos nicht mehr möglich ist. Unter diesen Umständen kann durch die Möglichkeit den einzelnen Reflektoren eine Geschwindigkeit zuzuweisen das Füllstandsecho weiterhin ermittelt und zuverlässig ausgegeben werden.

Durch die Einführung einer Modulation mit einer schnell aufeinanderfolgenden Sequenz von Einzelsweeps und eine entsprechend ausgeführte Auswertung der erfassten Signale ist es somit möglich, die Geschwindigkeit zu jeder Reflexionsstelle im Behälter zu ermitteln. Durch die Anwendung einer solchen Orts-Geschwindigkeits-Auswertung wird nicht nur die Entfernung zu einzelnen Reflektoren innerhalb des Behälters ermittelt, sondern auch die an der jeweiligen Position vorhandene Geschwindigkeit der Reflektoren. Bei der Auswertung wird das dazu benutzt, den Abstand zum Füllgut mit erhöhter Zuverlässigkeit zu bestimmen. Auf diese Art wird es möglich, die einzelnen Reflektoren zu klassifizieren, und insbesondere Füllgutechos von Störechos sicher zu unterscheiden. Zudem können verschiedene Betriebszustände innerhalb des Messbehälters unterschieden werden, um adaptiv die Signalaufbereitung und Signalauswertung im Füllstandmessgerät automatisiert anpassen und optimieren zu können.

Ausschlaggebend für das vorliegende Verfahren ist ein definiertes Zeitverhalten, umfassend ein exaktes Timing der Start- und Stopzeiten für jede Frequenzrampe und der Pausen zwischen den Frequenzrampen, sowie ein definiertes Frequenzverhalten, umfassend unter anderem die Startfrequenz und Stopfrequenz der jeweiligen Frequenzrampe.

Die vorliegende Erfindung wird nachfolgend anhand von Ausführungsbeispielen unter Bezugnahme auf die beigefügten Figuren eingehend erläutert. Es zeigen:
- Figur 1: eine Füllstandmessanordnung gemäß dem Stand der Technik (schon behandelt),
- Figur 2a) - c): Signalverläufe bei den Füllstandmessanordnungen gemäß Figur 1 (schon behandelt),
- Figur 3: die Füllstandmessanordnung aus Figur 1 bei aktiviertem Zulauf (schon behandelt),
- Figur 4a) - c): Signalverläufe bei der Füllstandmessanordnung gemäß Figur 3 (schon behandelt),

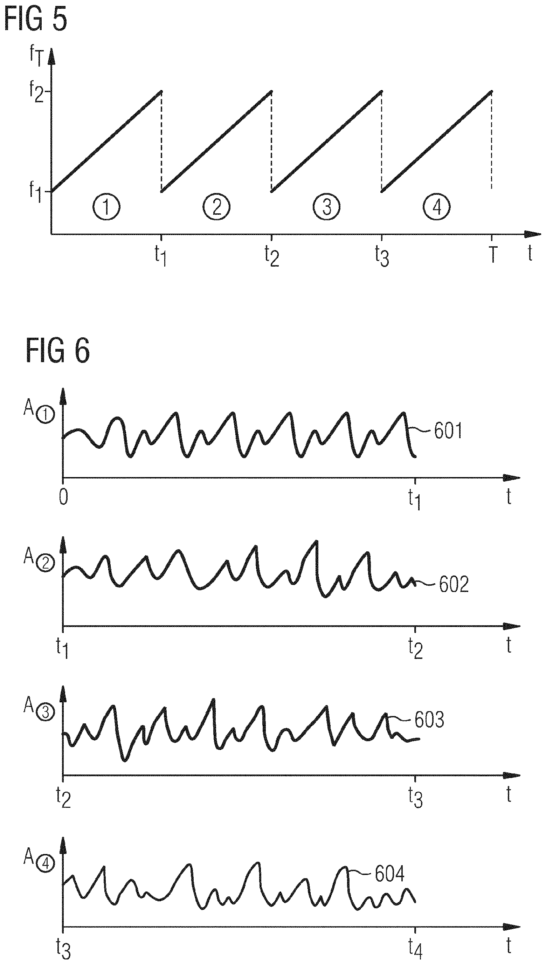

- Figur 5: das Sendesignal eines Verfahrens zur Füllstandmessung gemäß der vorliegenden Anmeldung,
- Figur 6: Empfangssignale, wie sie aus einem Sendesignal gemäß Figur 5 bei einer Anordnung gemäß Figur 3 erhalten werden,

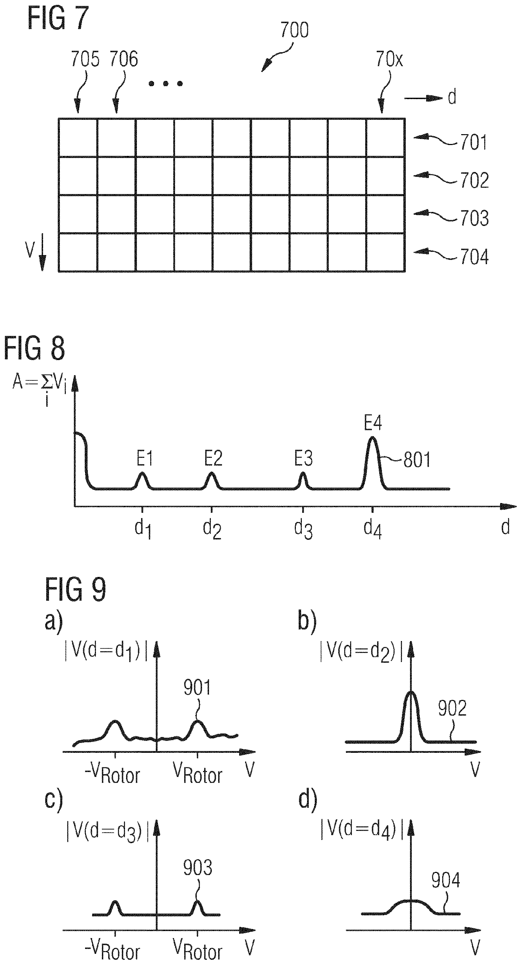

- Figur 7: eine Matrix zur systematischen Analyse der Empfangssignale gemäß Figur 6,
- Figur 8: ein Echosignal, wie es aus den Empfangssignalen gemäß Figur 7 ermittelbar ist,
- Figur 9 a)-d): die Geschwindigkeitsverteilung an den Orten der Reflektoren gemäß Figur 8,

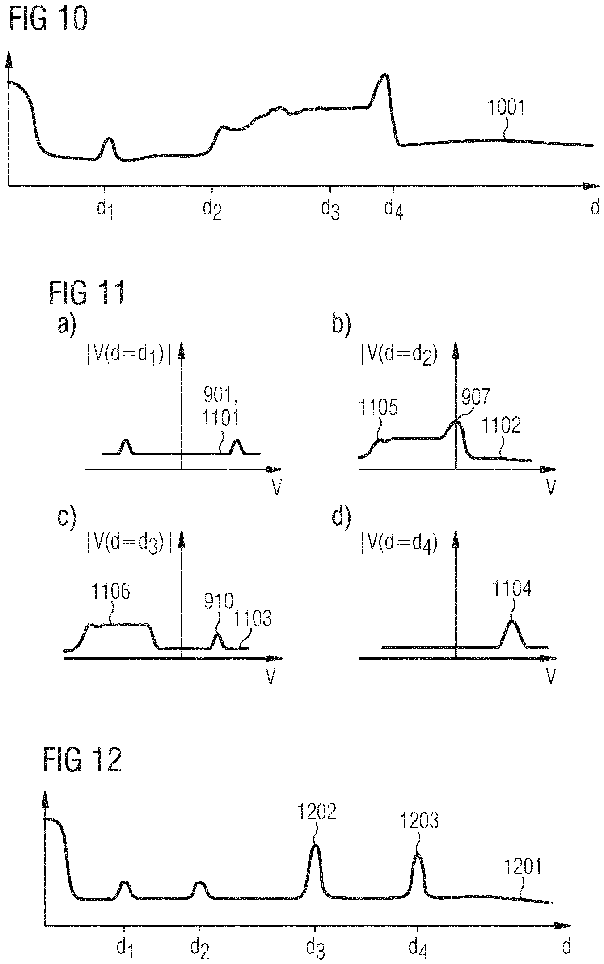

- Figur 10: ein Echosignal, wie es aus den Empfangssignalen gemäß Figur 3 ermittelbar ist,
- Figur 11 a)-d): Die Geschwindigkeitsverteilung an den Orten der Reflektoren gemäß Figur 10,
- Figur 12: ein Echoqsignal für einen sich entleerenden Messbehälter

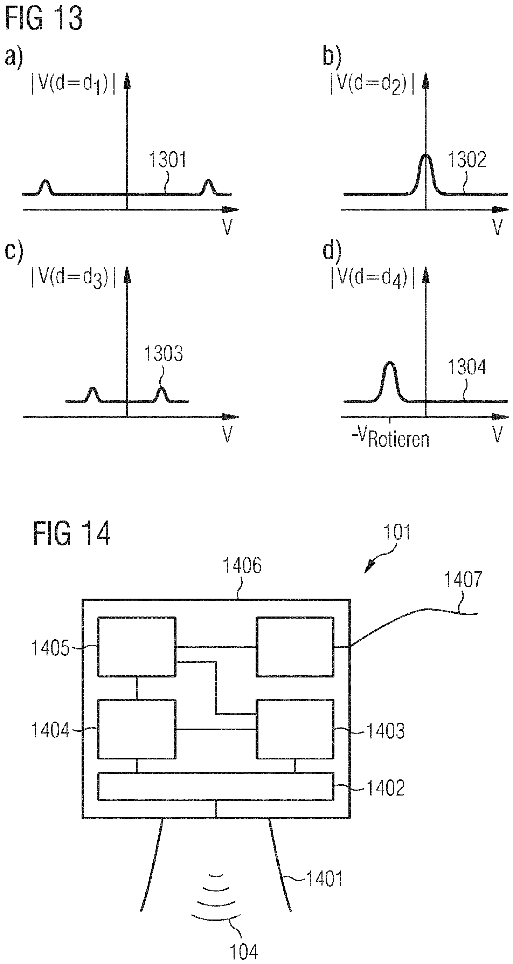

- Figur 13 a)-d): die Geschwindigkeitsverteilung an den Orten der Reflektoren gemäß Figur 12,
- Figur 14: ein Blockschaltbild eines Füllstandmessgeräts zur Durchführung des Verfahrens der vorliegenden Anmeldung und

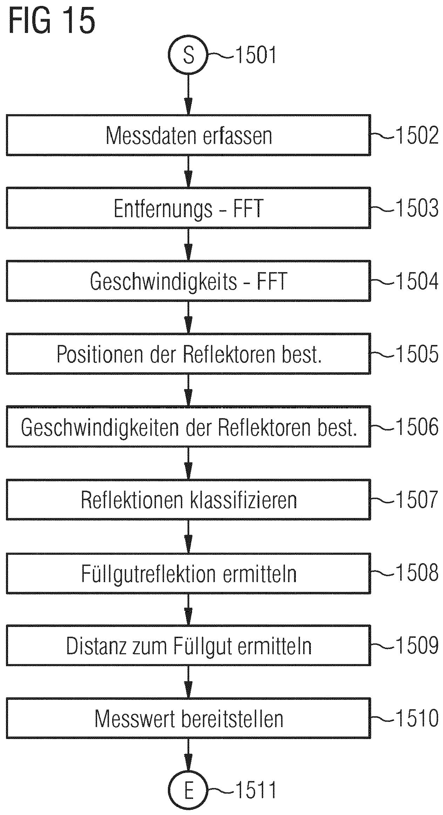

- Figur 15: einen beispielhaften Ablauf des Verfahrens der vorliegenden Anmeldung.

Figur 5 zeigt das Sendesignal 104 eines Verfahrens zur Füllstandmessung gemäß der vorliegenden Anmeldung.

Das Sendesignal 104 wird in diesem Ausführungsbeispiel während eines Messzyklus T in einem Zeitraum zwischen t = 0 und t = T in mehrere Frequenzrampen 501, 502, 503, 504 unterteilt, innerhalb welcher eine Frequenz f des abgestrahlten Radarsignals jeweils linear von einer Startfrequenz f1 hin zu einer Zielfrequenz f2 moduliert wird. Diese einzelnen Frequenzrampen werden auch als Chirps bezeichnet. Im Unterschied zu den bisher verwendeten Modulationsformen aus dem Stand der Technik wird während eines Messzyklus T zwischen t = 0 und t = T eine vorab definiert Anzahl an einzelnen Frequenzrampen 501, 502, 503, 504 mit definiertem Zeitverhalten und definiertem Frequenzverhalten in Richtung des Füllguts 107 abgestrahlt und wieder empfangen. Abweichend von der Darstellung der Figur 5 kann auch vorgesehen sein, dass zwischen zumindest zwei aufeinanderfolgenden Frequenzrampen 501, 502 eine definierte Pausenzeit eingeführt wird.

Als definiertes Zeitverhalten wird vorliegend ein vorbekanntes und exakt umgesetztes Timing der Start- und Stopzeiten für jede Frequenzrampe 501-504 und der Pausen zwischen den Frequenzrampen 501-504 verstanden. Ein definiertes Frequenzverhalten meint die exakte Einhaltung von Startfrequenz f1 und Stopfrequenz f2 sowie der Steigung der jeweiligen Frequenzrampen.

In Figur 5 sind der besseren Übersichtlichkeit halber lediglich vier Frequenzrampen 501-504 dargestellt. In einer tatsächlichen Umsetzung des vorliegenden Verfahrens werden wenigstens mehrere Zehn, bevorzugt mehrere Hundert, solcher Frequenzrampen 501-504 ausgesendet. Die Anzahl der Frequenzrampen 501-504 ist häufig eine Zweierpotenz, insbesondere 128, 256, 512 oder 1024. Abhängig von der jeweiligen Anwendung können auch höhere oder niedrigere Potenzen verwendet werden.

In Figur 6 sind die während der einzelnen Frequenzrampen 501-504 erfassten und auf eine Zwischenfrequenz umgesetzten Empfangssignale 601, 602, 603, 604, nachfolgend auch Zwischensignale genannt, dargestellt. Aus einer ersten Frequenzrampe 501 resultiert ein erstes Zwischensignal 601, aus einer zweiten Frequenzrampe 502 ein zweites Zwischensignal 602 usw.. Im Gegensatz zu den bisher verwendeten Verfahren bleibt anzumerken, dass die Zwischensignale 601-604 zum einen zeitlich kürzer sind, darüber hinaus aber auch höhere Signalfrequenzen im Vergleich zu der Frequenzrampe 209 gemäß dem Stand der Technik beinhalten. Die höheren Signalfrequenzen entstehen aufgrund der erhöhten Steilheit der Frequenzrampen 501-504.

Im Rahmen der Signalauswertung wird zunächst eine Geschwindigkeits- Entfernungsdarstellung auf Basis der Zwischensignale 601-604 errechnet.

Eine systematische Darstellung zur Errechnung einer solchen Geschwindigkeits-Entfernungs-Darstellung ist in Figur 7 gezeigt. Die Signale und Berechnungsergebnisse werden dazu in einer matrixartigen Darstellung verarbeitet.

Gemäß einem ersten Ausführungsbeispiel werden in einem ersten Schritt vorzugsweise die Zwischensignale 601-604 jedes für sich genommen einer ersten Spektralanalyse, beispielsweise einer schnellen Fouriertransformation, unterzogen. Im Beispiel der Figur 6 werden also zunächst vier Spektralanalysen durchgeführt, je eine pro Zwischensignal 601-604. Die sich ergebenden komplexwertigen Spektralwerte werden in einer Matrix 700 angeordnet, wobei im vorliegenden Ausführungsbeispiel die Zeilen der Matrix 700 gerade die aus der Spektralanalyse sich ergebenden Echokurven 701, 702, 703, 704 zu den auf eine Zwischenfrequenz umgesetzten Empfangssignalen 601, 602, 603 und 604 darstellen.

Anhand der Echokurven 701-704 kann die Entfernung zu einzelnen Echos E1, E2, E3, E4 bereits bestimmt werden, wobei sich bewegende Echos aufgrund der sehr kurz aufeinanderfolgenden Frequenzrampen 501-504 in guter Näherung an der gleichen Stelle der Echokurven 701-704 abgebildet werden. Eine Mittelung über die Echokurven 701-704 ist in Figur 8 als gemittelte Echokurve 801 dargestellt.

Mit anderen Worten kann festgehalten werden, dass sich die Signalenergie, wie sie anhand der Echokurven 701-704 ermittelt werden kann, sowohl bei stationären Reflektoren als auch bei sich bewegenden Reflektoren aufgrund der sehr kurzen Zeitabstände bei der Messung in der zumindest näherungsweise jeweils gleichen Entfernung abbildet. Eine Ermittlung der Geschwindigkeit von Echos ist anhand dieser Signale und der darin erfassbaren Orte der Reflektoren nicht möglich.

In einem zweiten Verfahrensschritt wird die Matrix 700 daher weiter verarbeitet.

Hierbei wird iterativ über jede Spalte 705, 706, ..., 70x, der Matrix 700 je eine zweite Spektralanalyse, vorzugsweise eine schnelle Fouriertransformation, durchgeführt. Im vorliegenden Beispiel wird also iterativ eine Vielzahl an schnellen Fouriertransformationen über die Echosignale 701-704 durchgeführt. Die Ergebnisse werden wiederum in der Matrix 700 abgespeichert.

In einer alternativen Ausführungsform gemäß einem zweiten Ausführungsbeispiel der vorliegenden Erfindung kann die Geschwindigkeits-Entfernungs-Darstellung der Figur 7 auch durch ein Vertauschen der ersten Spektralanalyse und der zweiten Spektralanalyse errechnet werden. Hierbei ist vorgesehen, in einem ersten Schritt zunächst die jeweils i-ten Abtastwerte der Zwischensignale 601-604 mit Hilfe der zweiten Spektralanalyse in Spaltenrichtung zu analysieren, und die Ergebnisse in die Spalten 705, 706, ... 70x der Matrix gemäß Figur 7 einzutragen.

In einem darauf aufbauenden Schritt werden die so erhaltenen Werte jeweils Zeile für Zeile (701, 702, 703, 704) mit Hilfe der ersten Spektralanalyse in die Ortsdarstellung überführt, und ebenfalls wieder die nun resultierende Geschwindigkeits-Entfernungs-Darstellung der Figur 7 eingetragen. Die gemäß diesem zweiten Ausführungsbeispiel erhaltene Geschwindigkeits-Entfernungs-Darstellung entspricht inhaltlich dem Ergebnis der Geschwindigkeits-Entfernungs-Darstellung gemäß dem ersten Ausführungsbeispiel. Die weiteren Ablaufschritte sind für beide Varianten identisch, und werden nachfolgend erörtert.

Nach Abschluss dieser Berechnungen stellt die Matrix 700 eine sogenannte Orts-Geschwindigkeits-Matrix dar. Anhand der Signalverläufe in den Zeilen der Matrix kann der Ort eines Reflektors ermittelt werden. Darüber hinaus kann für einen vorgebbaren Ort (eine vorgebbare Spalte der Matrix) anhand des Signalverlaufes der Spalte die Geschwindigkeitsverteilung an diesem Ort bestimmt werden.

Physikalische Grundlage dieser zweiten Spektralanalyse ist die Tatsache, dass sich die Phase der komplexwertigen Samples der Echokurven 701-704 von Messung zu Messung bei stationären Objekten nicht verändert, bei sich bewegenden Objekten jedoch proportional zur Geschwindigkeit ansteiget oder abfällt. Diese Veränderung der Phase kann durch eine Spektralanalyse in Spaltenrichtung näher untersucht werden.

Im Gegensatz zu bekannten Verfahren erfolgt die Ermittlung der Geschwindigkeit nicht durch eine Messung einer Abstandsänderung oder eine Doppleranalyse sondern durch Analyse einer Veränderung der Phase über der Zeit.

Die eigentliche Echobestimmung und Echoauswertung erfolgt nach Abschluss der beiden Spektralanalysen in Zeilen- und Spaltenrichtung aufbauend auf den komplexen Werten der Orts-Geschwindigkeits-Matrix 700.

Zunächst wird über eine Betragsbildung zumindest eines der Echosignale 701-704 oder auch ein gemitteltes Summensignal aus den zuvor genannten Einzelsignalen in eine klassische Echokurve gemäß der Darstellung der Figur 8 überführt. Anhand der dort beispielhaft gezeigten Echokurve 801 werden zunächst anhand der Echos E1, E2, E3, E4 die relevanten Reflektoren ermittelt und deren Entfernung d1, d2, d3, d4 zum Radarmessgerät 101 bestimmt. Die Entfernungen d1-d4 der Reflektoren wie sie in Figur 8 eingezeichnet sind, entsprechen den Entfernungen d1-d4 zu den Reflektoren der Anordnung gemäß Figur 1.

In einem zweiten Verfahrensschritt wird wiederum über eine Betragsbildung über die zu den Entfernungen d1-d4 der relevanten Reflektoren korrespondierenden Spalten der Orts-Geschwindigkeits-Matrix 700 eine Geschwindigkeitsverteilung 901, 902, 903, 904 ermittelt.

Die Figuren 9a) bis 9d) zeigen die Geschwindigkeitsverteilung an den Orten (Entfernungen) der relevanten Reflektoren, die gemäß Figur 8 ermittelt wurden.

Die erste Geschwindigkeitsverteilung 901 zeigt die Änderung der Phase der Empfangssignale 701-704 an der Position d = d1. In der Anordnung gemäß Figur 1 befindet sich in der ersten Entfernung d1 gerade der Rührwerksflügel 103, wobei die eine Hälfte dieses Rührwerksflügels 103 bedingt durch eine Drehung 110 des Rührwerks 102 sich auf das Radarmessgerät 101 zu bewegt und die andere Hälfte sich mit der im Wesentlichen gleichen Geschwindigkeit vom Radarmessgerät 101 weg bewegt. Die Geschwindigkeitsverteilung zeigt, wie in Figur 9a) dargestellt, eine erhöhte Signalenergie an der Stelle der positiven Geschwindigkeit VRotor und an der symmetrisch dazu gelegenen negativen Geschwindigkeitsstelle -VRotor. Anhand dieser Charakteristik kann das Radarmessgerät 101 die zugehörige Reflexion E1 eindeutig als Reflexion eines Rührwerkes 102 klassifizieren.

Im nächsten Verfahrensschritt wird die zweite Geschwindigkeitsverteilung 902 an der Stelle d = d2 ermittelt und analysiert. Die zugehörige Reflexion E2 entstammt in der entsprechenden Entfernung ausschließlich dem Zuflussrohr 106, welches keine Bewegung aufweist. Das in Figur 9b) gezeigte Spektrum 902 verdeutlicht dies durch eine erhöhte Signalenergie bei der Geschwindigkeit v = 0. Das Füllstandmessgerät 101 kann diese Reflexionsstelle daher zumindest eingrenzen als eine Reflexion von einem stationären Behältereinbau oder auch von einem nicht veränderten Füllstandecho entstammend.

In der in Figur 9c) dargestellten dritten Geschwindigkeitsverteilung 903, welche aus der Orts-Geschwindigkeits-Matrix 700 an der Stelle d = d3 ermittelt wurde, zeigen sich in gleicher Weise wie im Spektrum 901 zwei symmetrisch gelegene, charakteristische Signalerhöhungen, welche auf einfache Weise als vom Rührwerk 102 kommende Reflexion klassifiziert werden können.

Eine weitere Analyse der in Figur 9d) gezeigten dritten Geschwindigkeitsverteilung 904 an der Position d = d4 zeigt eine diffuse Verbreiterung eines an sich stationären Signals. Durch die Rührbewegung wird die Oberfläche des Füllguts 107 unruhig, es bilden sich beispielsweise Tromben aus, deren Geschwindigkeiten abhängig vom Radius in einem gewissen Bereich um 0 herum verschmiert werden. Dieses Verhalten weicht deutlich von dem Spektrum 907 eines klassischen stationären Störechos ab, weshalb hier eindeutig auf eine Füllgutreflexion geschlossen werden kann.

Das zuvor aufgezeigte Ausführungsbeispiel erweitert folglich die bislang genutzten Verfahren zur Klassifikation von Echos durch eine zusätzliche Analyse der Geschwindigkeitsverteilung 901-904 an den Orten relevanter Reflektoren. Das Verfahren funktioniert folglich auch unabhängig von zeitlichen Schwankungen der Amplituden der reflektierten Echosignale E1-E4, was zu einer deutlich verbesserten Zuverlässigkeit der Messung führt.

Figur 10 und Figur 11 zeigen die Signalverhältnisse in einem Beispiel gemäß Figur 3, in dem der Zufluss des Messbehälters 105 aktiviert ist, unter Anwendung des erfindungsgemäßen Verfahrens.

Die aus der Orts-Geschwindigkeits-Matrix 700 ermittelte und in Figur 10 dargestellte Echokurve 1001 ist aus den Empfangssignalen 601-604 ermittelbar und entspricht im Wesentlichen der Echokurve 402 aus Figur 4 c). Durch das Öffnen des Zuflussrohres 106 kommen zusätzliche Signalanteile 403 des zufließenden Füllguts 301 zur Echokurve 1001 hinzu. Bei der Analyse der zugehörigen Geschwindigkeitsverteilungen 1101, 1102, 1103, 1104 gemäß der Figuren 11a) bis 11d) ergeben sich weitere Informationen, welche dazu genutzt werden, die Situation eindeutig zu klassifizieren.

Die in Figur 11a) gezeigte erste Geschwindigkeitsverteilung 1101, welche die Geschwindigkeitswerte in einer Entfernung d = d1 widerspiegelt, entsteht durch den sich drehenden Rührwerksflügel 103, und weist die bereits in Bezug auf Figur 9a erläuterten charakteristischen Merkmale auf.

Die in Figur 9b) dargestellte zweite Geschwindigkeitsverteilung 1102 um die Stelle d = d2 herum enthält zunächst eine stationäre Geschwindigkeitskomponente 907 des Zuflussrohres 106, und darüber hinaus auch negative Geschwindigkeitskomponenten 1105 mit unterschiedlichem Betrag. Diese diffus verschmierten negativen Geschwindigkeiten werden durch sich nach unten hin beschleunigende Partikel des zufließenden Füllguts 301 verursacht, und besitzen keine spiegelbildlichen Gegenanteile im positiven Geschwindigkeitsbereich. Das Spektrum 1102 kann daher eindeutig als Geschwindigkeitsprofil eines Zuflussrohres 106 mit zufließendem Füllgut 301 identifiziert werden.

In dem in Figur 9c) gezeigten Spektrum 1103 überlagern sich in einer Entfernung d = d3 symmetrische Geschwindigkeitsanteile 909, 910 des Rührwerksflügels 103 mit den Geschwindigkeitskomponenten der nach unten hin beschleunigenden Partikel des zuströmenden Füllguts 301. Das Spektrum 1103 weist daher die positive Geschwindigkeit 910 des einen Rührwerksflügels 103 auf, aber auch die über einen gewissen Bereich 1106 verschmierten negativen Geschwindigkeitswerte 1106 des zufließenden Füllguts 301. Das Radarmessgerät 101 kann - ggf. auch unter Hinzunahme historischer Informationen aus früheren Messungen - eindeutig und unabhängig von der Amplitude der jeweiligen Echos zuverlässig feststellen, dass an der Position d = d3 der Befüllstrom erfasst wird.

Die in der Analyse in Figur 9d) gezeigte vierte Geschwindigkeitsverteilung 1304 an der Position d = d4 zeigt eine einzige positive Geschwindigkeitskomponente, welche durch die sich nach oben hin bewegende Füllgutoberfläche verursacht wird. Anhand dieser Beobachtung und unter Hinzunahme der Klassifikationsergebnisse zu den Spektren 1101, 1102 und 1103 kann daher sicher und unabhängig von den Amplitudenwerten der Echokurve 1001 die Reflexion 207 als vom Füllgut verursacht klassifiziert und vermessen werden. Die bei bisherigen Verfahren übliche Unsicherheit der Distanzbestimmung im Bereich zwischen den Reflexionen 205, 207 und 403 kann wirksam eliminiert werden.

Die Figuren 12 und Figur 13a)-d) zeigen ergänzend die Verhältnisse beim Entleeren des Behälters 105. Die Spektren 1301, 1302, 1303 werden in gleicher Weise wie in den bisherigen Beispielen klassifiziert. Anhand der Geschwindigkeitsverteilung des Spektrums 1304 kann eindeutig bestimmt werden, dass der Behälter mit der negativen Geschwindigkeit -VMedium entleert wird. Die Reflexionsstelle 1203 der Echokurve 1201 kann daher eindeutig als Mediumsreflektion ermittelt und deren Entfernung d4 als Messwert ausgegeben werden.

Es sei an dieser Stelle darauf hingewiesen, dass diese Klassifikation unabhängig von einer vorab durchzuführenden Störechospeicherung erfolgen kann. Es sei zudem darauf hingewiesen, dass die Reflexion 1203 auch dann als Füllgutreflexion erkannt werden kann, wenn andere Reflexionsstellen 1202 eine größere Amplitude aufweisen.

Figur 14 zeigt ein Blockschaltbild eines erfindungsgemäßen Radarfüllstandmessgerätes 101.

Das Radarmessgerät 101 ermittelt im Zusammenspiel einer Hochfrequenzeinheit 1402 und einer Antenne 1401, die das Sendesignal 104 in Richtung des Füllguts 107 aussendet, die von den Reflektoren reflektierten Empfangssignale 601, 602, 603, 604, die die Antenne 1401 empfängt. Eine Ortsbestimmungseinheit 1403 ermittelt aus diesen Empfangssignalen 601, 602, 603, 604 die Entfernungen d, d1, d2, d3, d4 zu den einzelnen Reflektoren im Messbehälter 105. Eine Geschwindigkeitsermittlungseinrichtung 1404 ermittelt zumindest zu den vorab ermittelten Entfernungen d, d1, d2, d3, d4 der Reflektoren im Messbehälter 105 die Geschwindigkeitsverteilung.

Eine Auswerteeinheit 1405 ermittelt unter Verwendung der ermittelten Entfernungen d, d1, d2, d3, d4 zu den einzelnen Reflektoren und unter Verwendung zumindest einer Geschwindigkeitsverteilung eines vorgebbaren Entfernungswertes, bspw. durch Klassifikation der Reflektoren, zumindest ein Echo, anhand dessen Position auf den Füllstand in dem Messbehälter 105 geschlossen werden kann. Eine Kommunikationseinheit 1406 stellt über zumindest einen drahtgebundene oder drahtlosen Kommunikationskanal 1407 den Messwert und/oder eine Geschwindigkeit und/oder eine Geschwindigkeitsverteilung nach außen hin bereit.

Figur 15 zeigt einen typischen Ablauf eines erfindungsgemäßen Messverfahrens.

Das Verfahren beginnt in einem Startzustand 1501. Zunächst werden in einem Schritt 1502 anhand eines Sendesignals 104 mit zumindest einer Sequenz von einzelnen Frequenzrampen 501, 502, 503, 504, wie sie bspw. in Figur 5 gezeigt sind, Empfangssignale 601, 602, 603, 604, wie sie beispielhaft in Figur 6 dargestellt sind, erfasst und in einem Speicher des Radarmessgeräts 101 abgelegt.

In Schritt 1503 werden die Empfangssignale 601, 602, 603, 604 in Entfernungsrichtung oder Ortsrichtung, d.h. pro Empfangssignal 601, 602, 603, 604, was in der in Figur 7 gezeigten Matrix-Darstellung zeilenweise bedeutet, einer ersten Spektralanalyse, bspw. einer schnellen Fouriertransformation, unterzogen.

In Schritt 1504 wird auf den analysierten Daten, d.h. den Ergebnissen der ersten Spektralanalyse über die einzelnen Frequenzrampen hinweg eine zweite Spektralanalyse in Geschwindigkeitsrichtung berechnet. Die zweite Spektralanalyse wird also in der Darstellung der Figur 7 in Spaltenrichtung durchgeführt.

In Schritt 1505 werden die Entfernungen relevanter Reflektoren aus zumindest einer Echokurve 203 ermittelt.

In Schritt 1506 wird zumindest eine Geschwindigkeitsverteilung an der Stelle zumindest eines relevanten Reflektors ermittelt, d.h. an der Position wenigstens eines relevanten Reflektors in der Echokurve 203 wird die durch die zweite Spektralanalyse ermittelte Phase, über die einzelnen Empfangssignale 601, 602, 603, 604 hinweg untersucht.

Im Schritt 1507 wird zumindest ein relevanter Reflektor anhand der zuvor ermittelten Informationen zu Entfernung, Phase bzw. Geschwindigkeit und ggf. historischen Daten aus vorangegangenen Messungen, klassifiziert, beispielsweise als Füllgutecho, Rührwerksecho, Störecho, Befüllstromecho oder Bodenecho.

In Schritt 1508 wird die Füllgutreflexion ermittelt. Dies kann positiv erfolgen, d.h. wenn die Füllgutreflexion im vorhergehenden Schritt eindeutig klassifiziert wurde, kann diese direkt ausgegeben werden.

War eine eindeutige positive Identifizierung des Füllgutechos nicht möglich, kann bspw. nach einem Ausschlussverfahren unter Berücksichtigung der vorab erfolgten Klassifikation vorgegangen werde. Insbesondere werden dabei alle relevanten Reflektoren, die eindeutig nicht das Füllstandecho repräsentieren, ausgeschlossen. Unter den dann verbleibenden relevanten Reflektoren wird unter Heranziehung weiterer Daten, bspw. historischer Daten, d.h. Daten aus vorhergehenden Messungen, das Füllgutecho identifiziert.

In Schritt 1509 wird die Entfernung d zum Füllgut aus der Echokurve 203 für den als Füllgutreflexion ermittelten relevanten Reflektor bestimmt und in Schritt 1510 als Distanz zum Füllgut oder ein daraus ableitbarer numerischer Wert, bspw. das Restvolumen, der Befüllungsgrad in Prozent oder dergleichen, nach außen hin bereitgestellt, bevor das Verfahren in Schritt 1511 endet.

### Bezugszeichenliste

- 100: Füllstandmessanordnung
- 101: Radarfüllstandmessgerät / Radarmessgerät
- 102: Rührwerk
- 103: Rührwerksflügel
- 104: Messsignal / Sendesignal
- 105: Messbehälter
- 106: Zuleitungsrohr
- 107: Medium

- 109: Antenne
- 110: Drehung

- 202: Kurve
- 203: Kurve, Echokurve

- 209: Kurve

- 301: zufließendes Füllgut

- 401: Kurve
- 403: Reflexionsanteile des zufließenden Füllguts

- 501: erste Frequenzrampe
- 502: zweite Frequenzrampe
- 503: dritte Frequenzrampe
- 504: vierte Frequenzrampe

- 601: erstes Zwischensignal
- 602: zweites Zwischensignal
- 603: drittes Zwischensignal
- 604: viertes Zwischensignal

- 701: erste Echokurve
- 702: zweite Echokurve
- 703: dritte Echokurve
- 704: vierte Echokurve

- 801: Echokurve

- 901: erste Geschwindigkeitsverteilung
- 902: zweite Geschwindigkeitsverteilung
- 903: dritte Geschwindigkeitsverteilung
- 904: vierte Geschwindigkeitsverteilung

- 1001: Echokurve

- 1104: erste Geschwindigkeitsverteilung
- 1102: zweite Geschwindigkeitsverteilung
- 1103: dritte Geschwindigkeitsverteilung
- 1104: vierte Geschwindigkeitsverteilung

- 1401: Antenne
- 1402: Hochfrequenzeinheit
- 1403: Ortsbestimmungseinheit
- 1404: Geschwindigkeitsermittlungseinheit
- 1405: Auswerteeinheit
- 1406: Kommunikationseinheit
- 1407: Kommunikationskanal

- d: Entfernung
- d1: erste Entfernung
- d2: zweite Entfernung
- d3: dritte Entfernung
- d4: vierte Entfernung / Füllstand

- f: Frequenz
- f1: Startfrequenz
- f2: Zielfrequenz

- t: Zeit
- t1-t4: Dauer einer Frequenzrampe
- T: Messperiode

- E1: erstes Echo
- E2: zweites Echo
- E3: drittes Echo
- E4: viertes Echo

- H: Hauptabstrahlrichtung

## Patentansprüche

1. Verfahren zur Füllstandmessung mit einem Radarfüllstandmessgerät (101) anhand folgender Schritte:
- Aussenden eines Sendesignals (104) mit einer Mehrzahl von Frequenzrampen (501-504),
- Empfangen eines Empfangssignals pro Frequenzrampe des Sendesignals (104),
- Abspeichern der Empfangssignale in einem Speicher,
- Durchführen einer ersten Spektralanalyse der Empfangssignale,
- Ermitteln von Abständen (d) signifikanter Reflektoren aus der ersten Spektralanalyse wenigstens eines Empfangssignals,
- Durchführen einer zweiten Spektralanalyse mehrerer Ausgangssignale der ersten Spektralanalyse wenigstens an der Stelle wenigstens eines signifikanten Reflektors im Empfangssignal,
- Bestimmung des Füllstandechos aufgrund der zuvor ermittelten Informationen.

2. Verfahren gemäß Anspruch 1,
**dadurch gekennzeichnet, dass**
das Ermitteln der Abstände (d) auf Basis eines Mittelwerts über eine Mehrzahl von Empfangssignalen erfolgt.

3. Verfahren gemäß einem der vorhergehenden Ansprüche,
**dadurch gekennzeichnet, dass**
zur Bestimmung des Füllstandechos aus den Abständen der signifikanten Reflektoren eine Klassifikation der einzelnen Reflektoren anhand spezifischer Charakteristika erfolgt.

4. Verfahren gemäß einem der vorhergehenden Ansprüche,
**dadurch gekennzeichnet, dass**
zur Bestimmung des Füllstandechos aus den Abständen der signifikanten Reflektoren historische Informationen aus vorhergehenden Messungen berücksichtigt werden.

5. Verfahren gemäß einem der vorhergehenden Ansprüche,
**dadurch gekennzeichnet, dass**
die Spektralanalyse eine schnelle Fouriertransformation (FFT) ist.

6. Verfahren gemäß einem der vorhergehenden Ansprüche,
**dadurch gekennzeichnet, dass**
ein Sendesignal (104) mit wenigstens 25, vorzugsweise wenigstens 50, weiter vorzugsweise einigen Hundert Frequenzrampen (501-504) ausgesendet wird.

7. Verfahren gemäß einem der vorhergehenden Ansprüche,
**dadurch gekennzeichnet, dass**
das Sendesignal (104) eine Anzahl von 2ⁿ Frequenzrampen (501-504) aufweist.

8. Verfahren gemäß Anspruch 7,
**dadurch gekennzeichnet, dass**
das Sendesignal (104) 128, 256 oder 512 Frequenzrampen (501-504) enthält.

9. Verfahren gemäß einem der vorhergehenden Ansprüche,
**dadurch gekennzeichnet, dass**
eine Frequenzrampe (501-504) eine Dauer (t1-t4) zwischen 1 µs und 1000 ps, vorzugsweise zwischen 50 µs und 300 ps, insbesondere 100 µs oder 200 µs aufweist.

10. Verfahren gemäß einem der vorhergehenden Ansprüche,
**dadurch gekennzeichnet, dass**
eine Startfrequenz (f1) und/oder eine Steigung und/oder eine Schrittweite und/oder eine Pausenzeit der Frequenzrampen variiert.

11. Verfahren zur Füllstandmessung mit einem Radarfüllstandmessgerät,
**dadurch gekennzeichnet, dass**
das Verfahren gemäß einem der vorhergehenden Ansprüche angewendet wird, wenn eine Füllstandmessung mit einem FMCW Verfahren nicht möglich ist.

12. Verfahren zur Füllstandmessung mit einem Radarfüllstandmessgerät (101) anhand folgender Schritte:
- Aussenden eines Sendesignals (104) mit einer Mehrzahl von Frequenzrampen (501-504),
- Empfangen einer Mehrzahl an Empfangssignalen, wobei ein Empfangssignal pro Frequenzrampe des Sendesignals (104) empfangen wird,
- Abspeichern der Empfangssignale in einem Speicher,
- Durchführen einer zweiten Spektralanalyse der Empfangssignale, wobei hierzu zumindest zwei der Empfangssignale der Mehrzahl von Empfangssignalen (501-504) verwendet werden,
- Durchführen einer ersten Spektralanalyse mehrerer Ausgangssignale der zweiten Spektralanalyse,
- Ermitteln von Abständen (d) signifikanter Reflektoren aus den Ergebnissen der ersten Spektralanalyse,
- Ermittlung von Geschwindigkeitswerten signifikanter Reflektoren, aus den Ergebnissen der zweiten Spektralanalyse,
- Bestimmung des Füllstandechos aufgrund der zuvor ermittelten Informationen.

## Geänderte Patentansprüche

### Geänderte Patentansprüche gemäss Regel 137(2) EPÜ.

1. Verfahren zur Füllstandmessung mit einem Radarfüllstandmessgerät (101) anhand folgender Schritte:
- Aussenden eines Sendesignals (104) mit einer Mehrzahl von Frequenzrampen (501-504),
- Empfangen eines Empfangssignals pro Frequenzrampe des Sendesignals (104),
- Abspeichern der Empfangssignale in einem Speicher,
- Durchführen einer ersten Spektralanalyse der Empfangssignale,
- Ermitteln von Abständen (d) signifikanter Reflektoren aus der ersten Spektralanalyse wenigstens eines Empfangssignals,
- Durchführen einer zweiten Spektralanalyse mehrerer Ausgangssignale der ersten Spektralanalyse wenigstens an der Stelle wenigstens eines signifikanten Reflektors im Empfangssignal,
- Ermittlung von Geschwindigkeitswerten signifikanter Reflektoren, aus den Ergebnissen der zweiten Spektralanalyse,
- Bestimmung des Füllstandechos aufgrund der zuvor ermittelten Informationen.

2. Verfahren gemäß Anspruch 1,
**dadurch gekennzeichnet, dass**
das Ermitteln der Abstände (d) auf Basis eines Mittelwerts über eine Mehrzahl von Empfangssignalen erfolgt.

3. Verfahren gemäß einem der vorhergehenden Ansprüche,
**dadurch gekennzeichnet, dass**
zur Bestimmung des Füllstandechos aus den Abständen der signifikanten Reflektoren eine Klassifikation der einzelnen Reflektoren anhand spezifischer Charakteristika erfolgt.

4. Verfahren gemäß einem der vorhergehenden Ansprüche,
**d a durc h g e k e n n z e ichn e t,** dass
zur Bestimmung des Füllstandechos aus den Abständen der signifikanten Reflektoren historische Informationen aus vorhergehenden Messungen berücksichtigt werden.

5. Verfahren gemäß einem der vorhergehenden Ansprüche,
**dadurch gekennzeichnet, dass**
die Spektralanalyse eine schnelle Fouriertransformation (FFT) ist.

6. Verfahren gemäß einem der vorhergehenden Ansprüche,
**dadurch gekennzeichnet, dass**
ein Sendesignal (104) mit wenigstens 25, vorzugsweise wenigstens 50, weiter vorzugsweise einigen Hundert Frequenzrampen (501-504) ausgesendet wird.

7. Verfahren gemäß einem der vorhergehenden Ansprüche,
**dadurch gekennzeichnet, dass**
das Sendesignal (104) eine Anzahl von 2ⁿ Frequenzrampen (501-504) aufweist.

8. Verfahren gemäß Anspruch 7,
**dadurch gekennzeichnet, dass**
das Sendesignal (104) 128, 256 oder 512 Frequenzrampen (501-504) enthält.

9. Verfahren gemäß einem der vorhergehenden Ansprüche,
**dadurch gekennzeichnet, dass**
eine Frequenzrampe (501-504) eine Dauer (t1-t4) zwischen 1 µs und 1000 µs, vorzugsweise zwischen 50 µs und 300 µs, insbesondere 100 µs oder 200 µs aufweist.

10. Verfahren gemäß einem der vorhergehenden Ansprüche,
**dadurch gekennzeichnet, dass**
eine Startfrequenz (f1) und/oder eine Steigung und/oder eine Schrittweite und/oder eine Pausenzeit der Frequenzrampen variiert.

11. Verfahren zur Füllstandmessung mit einem Radarfüllstandmessgerät (101) anhand folgender Schritte:
- Aussenden eines Sendesignals (104) mit einer Mehrzahl von Frequenzrampen (501-504),
- Empfangen einer Mehrzahl an Empfangssignalen, wobei ein Empfangssignal pro Frequenzrampe des Sendesignals (104) empfangen wird,
- Abspeichern der Empfangssignale in einem Speicher,
- Durchführen einer zweiten Spektralanalyse der Empfangssignale, wobei hierzu zumindest zwei der Empfangssignale der Mehrzahl von Empfangssignalen (501-504) verwendet werden,
- Durchführen einer ersten Spektralanalyse mehrerer Ausgangssignale der zweiten Spektralanalyse,
- Ermitteln von Abständen (d) signifikanter Reflektoren aus den Ergebnissen der ersten Spektralanalyse,
- Ermittlung von Geschwindigkeitswerten signifikanter Reflektoren, aus den Ergebnissen der zweiten Spektralanalyse,
- Bestimmung des Füllstandechos aufgrund der zuvor ermittelten Informationen.
